# EUROPÄISCHE PATENTSCHRIFT

(11) **EP 4 229 741 B1**
(45) Veröffentlichungstag und Bekanntmachung des Hinweises auf die Patenterteilung: **14.08.2024**
(21) Anmeldenummer: 21786943.7
(22) Anmeldetag: 05.10.2021
(51) Int. Cl.: H02K 9/14, H02K 11/33, H02K 5/20

(54) **KREISELPUMPE MIT EINEM ANTRIEB**
CENTRIFUGAL PUMP COMPRISING A DRIVE
POMPE CENTRIFUGE COMPRENANT UN ENTRAÎNEMENT

(30) Priorität: 16.10.2020 DE 102020006365
(43) Veröffentlichungstag der Anmeldung: 23.08.2023
(73) Patentinhaber: KSB SE & Co. KGaA, 67227 Frankenthal (DE)
(72) Erfinder: SCHUNK, Axel, 67227 Frankenthal (DE)
(86) Internationale Anmeldenummer: PCT/EP2021/077415
(87) Internationale Veröffentlichungsnummer: WO 2022/078817

(56) Entgegenhaltungen:
- EP-A1- 2 557 667
- EP-A2- 1 511 156
- US-A1- 2014 265 664

## Beschreibung

Die Erfindung betrifft eine Kreiselpumpe mit einem Antrieb, der eine Motorelektronik aufweist, die von einer Anordnung zur Wärmeableitung getragen wird und einem Lüfter zur Erzeugung einer ersten Luftströmung.

Eine Kreiselpumpenanordnung umfasst in der Regel eine oder mehrere Kreiselpumpen, einen oder mehrere Elektromotoren und elektronische Geräte zur Drehzahlregelung sowie zur Frequenzumrichtung. Dabei benötigen gerade die Elektromotoren und die dazugehörige Motorelektronik ausreichende Kühlung.

Derartige typische Elektromotoren sind allgemein bekannt. Häufig ist an einem an der Motoraußenwand angeordneten Elektronikgehäuse die Anordnung der Motorelektronik vorgesehen. Diese beinhaltet in der Regel einen Frequenzumrichter und eine Leistungssteuerung und/oder eine Drehzahlregelung. Oft werden solche Elektronikgehäuse auf einem Sockel angeordnet, damit die Abwärme des Elektromotors die Elektronik nicht beeinflusst. Dadurch erreicht aber der Kühlluftstrom des Motors nicht mehr in ausreichender Weise die Anordnung der Elektronik, wodurch oft eine separate Kühlung der Elektronik nötig wird.

Allgemein bekannt sind die radiale als auch axiale Aufbauweise solcher Kühlungen für Elektromotoren und Frequenzumrichter. In der DE 103 39 585 A1 wird ein axial erzeugter Kühlluftstrom beschrieben, der anhand von Luftleitelementen zur Kühlung des radial aufgebauten Klemmkastens abgelenkt wird. Die Luftleitelemente können variabel angeordnet werden, um das Ziel ausreichender Kühlung zu erreichen. Dazu ist ein Monteur nötig, welcher im Betrieb die Kühlung ausreichend einstellt. Weiterhin ist diese Erfindung aus vielen Einzelteilen aufgebaut, was kostentreibend und montageaufwendig ist.

Die DE 103 62 051 beschreibt eine Anordnung eines Lüfters zur Kühlung des Motors und eines Stromrichters, wobei das Lüfterrad durch die Motorwelle angetrieben wird. Der Luftstrom kühlt dabei den Motor und die Elektronik gleichermaßen. Insgesamt besteht die Anordnung aus einer Vielzahl einzelner Teile, wie dem Statorgehäuse mit B-Lagerflansch, Lüfterrad, Auswertelektronik, Bremse und magnetisierbarem Kunststoffrad sowie einem Lüfterdeckel. Dadurch ist die Konstruktion sehr montageaufwendig, wobei der Fokus der Erfindung vordringlich auf der Positionsbestimmung des Lüfterrades liegt.

Die DE 10 2008 051 650 A1 offenbart eine Erfindung mit gemeinsamer Kühlung des Motors und der Motorelektronik, bei der der Luftstrom durch das Kühlgerippe der Elektronikkühlung angesaugt wird, bevor das Lüfterrad den Luftstrom zur Kühlung des Motorgerippes antreibt. Hier liegt der Fokus auf der Kühlung einer sehr großen Motorelektronik, die sowohl axial als auch radial um den Motor aufbaut.

Die EP 2 557 667 A1 zeigt eine rotierende elektrische Maschine mit einem Stator und einem Rotor, die beide in einem Rahmen untergebracht sind, auf dem ein Steuergehäuse zur Aufnahme einer Antriebseinheit einschließlich eines Wechselrichters montiert ist. In der Maschine weist das Steuergehäuse eine Vibrationsunterdrückungsstruktur auf, die Vibrationen des Steuergehäuses unterdrückt oder eine natürliche Vibrationsfrequenz des Steuergehäuses einstellt.

Die US 2014/265664 A1 offenbart eine elektrische Maschine mit einem Gehäuse mit mindestens einem Lufteinlass, einem Luftauslass und einem Luftdurchgang, wobei ein Luftstrom einen ersten und einen zweiten Kühlkörper kühlt.

Aufgabe der Erfindung ist es, eine Vorrichtung so zu gestalten, dass ein Elektromotor und dessen Motorelektronik gleichzeitig mit einem Lüfter gekühlt werden können. Um die Kühlleistung zu steigern, sollte der Lüfter mehr als einen Luftstrom ansaugen können. Weiterhin sollte das Bauteil aus einem wärmeleitfähigen Material bestehen und die entstehende Wärme des Motors als auch der Motorelektronik gut abführen können. Darüber hinaus sollte durch die Gestaltung des Bauteils die Anzahl der mechanischen Schnittstellen sowie der Dichtungen reduziert werden. Der Austausch von Ersatzteilen sollte durch die Konstruktion der Vorrichtung begünstigt sein. Die Vorrichtung sollte einfach und kostengünstig realisiert werden können.

Diese Aufgabe wird erfindungsgemäß durch eine Kreiselpumpe mit einem Antrieb mit den Merkmalen des Anspruchs 1 gelöst. Bevorzugte Varianten sind den Unteransprüchen, der Beschreibung und den Figuren zu entnehmen.

Vorteilhafterweise saugt der Lüfter des elektrischen Antriebs einer Kreiselpumpe einen ersten Luftstrom zentral durch einen perforierten Lüfterdeckel an und erzeugt dabei einen ersten Luftstrom zur Kühlung, der das Motorgehäuse und die Anordnung zur Wärmeableitung der Motorelektronik überströmt. Die Konstruktion des Lüfterdeckels und dessen Anschluss am Motorgehäuse bilden mindestens eine Öffnung, die das Ansaugen eines zweiten Luftstroms, durch den ersten Luftstrom bedingt, ermöglicht, wodurch die Kühlleistung des Motors und der Motorelektronik besonders intensiviert werden kann.

Erfindungsgemäß sind die Öffnungen zur Zuströmung einer zweiten Luftströmung jeweils als eine Fläche ausgebildet, die sich aus der Begrenzung der Anordnung zur Wärmeableitung in Form des Elektronikgehäusebodens der Motorelektronik, aus den oberflächenvergrößernden Elementen in Form von Kühlrippen sowie dem Lüfterdeckel formen.

Erfindungsgemäß ist die Abdeckung des Lüfters in der Art angeordnet, so dass sie zumindest teilweise in die Öffnungen zur Zuströmung einer zweiten Luftströmung hineinragt, wodurch ein Raum in Form eines Kanals zur Zuströmung der ersten Luftströmung gebildet wird, der in einen zweiten Raum mündet, in dem die erste Luftströmung mit der zweiten Luftströmung, welche durch die Sogwirkung der ersten Luftströmung angesaugt in diesen zweiten Raum gelangt, vermischt wird. Dadurch wird eine besonders intensive Luftströmung erzeugt, die im weiteren Strömungsverlauf die Wärme der Motorelektronik sowie die Wärme des Elektromotors, besonders effizient abführt.

Der Lüfter des Elektromotors saugt durch die perforierte Lüfterabdeckung einen ersten Luftstrom an und treibt ihn zur Kühlung des Elektromotors sowie der Motorelektronik über das Motorgehäuse. Dieser Luftstrom hat direkten Kontakt zum Lüfter und ist damit ein direkter sowie primärer Luftstrom. Vorteilhafterweise werden durch die Anordnung zur Wärmeableitung sowie deren Kühlrippen in Kombination mit dem Motorgehäuse Kanäle gebildet. Die vom Lüfter erzeugte erste Luftströmung strömt mit einem höheren Druck als der umgebende Druck durch diese Kanäle. Idealerweise wird durch diese erste Luftströmung ein Sog über die Öffnungen für die zweite Luftströmung erzeugt. Diese zweite durch die Sogwirkung des ersten Luftstroms erzeugte Luftströmung ist als indirekt anzusehen.

Erfindungsgemäß ist ein lüfterseitiger Lagerdeckel mit einer Anordnung zur Wärmeableitung der Motorelektronik, insbesondere des Frequenzumrichters, verbunden. Dieser Lagerdeckel hat die Funktion eines Deckels des Motorgehäuses und trägt die Lager zur Lagerung der Welle, welche formschlüssig und/oder kraftschlüssig in den Lagerdeckel integriert sein können. Die Anordnung zur Wärmeableitung kann bevorzugt als Kühlkörper ausgeführt sein. Ein solcher hat neben der Wärmeableitung die Aufgabe zum Tragen der Motorelektronik und ist idealerweise als ein Elektronikgehäuseboden ausgestaltet. Die Motorelektronik kann in einem solchen Elektronikgehäuse unmittelbar oder mittelbar befestigt sein. In einer alternativen Ausführung der Erfindung kann die Motorelektronik auch schwebend angebracht sein. Bevorzugt ist die Motorelektronik vollflächig aufliegend und rutschgesichert angeordnet, da so die Wärme optimal abgeleitet werden kann. Vorteilhafterweise kann durch die verbundene Konstruktion des Lagerdeckels mit dem Kühlkörper die Kühlung des Elektromotors und der Motorelektronik besonders leistungsstark ausgestaltet werden.

In einer besonders vorteilhaften Variante der Erfindung ist der lüfterseitige Lagerdeckel, beispielsweise der lüfterseitige Endlagerdeckel des Motorgehäuses mit der Anordnung zur Wärmeableitung verbunden. Diese Anordnung ist musterhaft ein Elektronikgehäuseboden für die Motorelektronik und in seiner Ausgestaltung inklusive Kühlrippen zur Wärmeabfuhr der Motorelektronik, die einen Frequenzumrichter und eine Leistungssteuerung und eine Drehzahlregelung umfassen kann, optimiert. Aufgrund der verbundenen Konstruktion ist die Wärmeleitung zu den gekühlten Oberflächen verbessert. Darüber hinaus kann mittels der sinnvoll angeordneten Luftkanäle der vom Lüfter erzeugte Kühlluftstrom besonders gut die Wärme des Elektromotors und der Motorelektronik abführen.

Bevorzugt ist die Anordnung zur Wärmeableitung mit dem lüfterseitigen Lagerdeckel einstückig ausgebildet. In der Ausgestaltung eines einstückigen Gussteils ist der Elektronikgehäuseboden mit den oberflächenvergrößernden Elementen in Form von angeformten Kühlrippen und der lüfterseitige Lagerdeckel hinsichtlich der Wärmeleitung besonders effizient. Darüber hinaus ist die Reduktion der zu montierenden Teile und der Dichtflächen durch die Einstückigkeit besonders montagefreundlich. Gleichzeitig ist der Austausch von Ersatzteilen ohne großen Aufwand möglich.

In einer weiteren Variante der Erfindung ist die Verbindung der Anordnung zur Wärmeableitung mit dem Lagerdeckel in Form einer Verschraubung ausgestaltet, so dass durch die Motorgeometrie begründete Montageerfordernisse montagefreundlich gestaltet werden können.

Besonders vorteilhaft ist der als Anordnung zur Wärmeableitung gestaltete Elektronikgehäuseboden, der zur Steigerung der Kühlleistung über oberflächenvergrößernde Elemente verfügt. Diese sind in Form von plattenförmigen Kühlrippen mit möglichst großer Oberfläche zur Wärmeabfuhr optimiert und einstückig mit dem Elektronikgehäuseboden ausgebildet. Die Oberfläche der Kühlrippen ist hinsichtlich der zu erwartenden Wärmeentwicklung der Motorelektronik dimensioniert. Darüber hinaus sind die Kühlrippen des Elektronikgehäuses an die Form des Motorgehäuses angepasst.

In einer bevorzugten Variante der Erfindung umfasst die Anordnung zur Wärmeableitung mit angeformten Kühlrippen zusätzliche Luftleitbleche in Kombination mit Aussparungen, die zur Erhöhung des Luftstroms beitragen und eine leistungsstarke Kühlung der Motorelektronik ermöglichen.

Erfindungsgemäß weist der Lagerdeckel, welcher beispielsweise ein lüfterseitiger Lagerdeckel des Motorgehäuses sein kann, Aussparungen und Durchführungen für Kabel und Stecker auf. Auf diese Weise ist eine Datenkommunikation zwischen der Motorelektronik, insbesondere des Frequenzumrichters und der Statorwicklung selbst vorteilhaft realisierbar.

Der erfindungsgemäße Lagerdeckel des elektrischen Antriebs, der einstückig mit der Anordnung zur Wärmeableitung ausgebildet ist, kann prinzipiell sowohl für Asynchronmotoren, für Synchronmotoren als auch für Synchron-Reluktanzmotoren eingesetzt werden.

Eine bevorzugte Variante der Erfindung stellt die einstückige Ausbildung des lüfterseitigen Motorgehäusedeckels mit dem Elektronikgehäuseboden dar. Der Lagerdeckel mit der Anordnung zur Wärmeableitung kann als Gussteil aus einem Material mit hoher Wärmeleitfähigkeit, insbesondere aus Aluminium, hergestellt werden. Die Realisierung der Kühlung in Form eines Lüfters in Kombination mit optimierten Lüftungskanälen und oberflächenvergrößernden Kühlrippen mit dem besonders wärmeleitfähigen Material Aluminium ist als äußerst leistungsstark anzusehen.

Die Konstruktion des einstückigen Lagerdeckels mit der Anordnung zur Wärmeableitung ermöglicht vorteilhafterweise die gleichzeitige Kühlung der Motorelektronik und des Elektromotors. Zuvor wurden oft zwei separate Kühlungen genutzt, die jetzt auf eine besonders effiziente Kühlung reduziert werden können.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: eine schematische Darstellung einer Kreiselpumpe mit einem Verbindungselement und einem elektrischen Antrieb,
- Fig. 2: einen Schnitt eines elektrischen Antriebs einer Kreiselpumpe,
- Fig. 3: einen elektrischen Antrieb in der perspektivischen Seitenansicht,
- Fig. 4: einen Lagerdeckel in der perspektivischen Innenansicht.

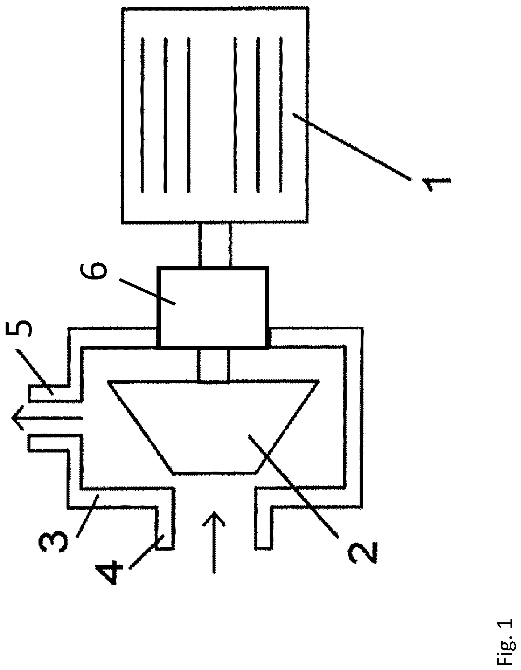

Die Fig. 1 zeigt den grundsätzlichen Aufbau einer durch einen elektrischen Antrieb 1 angetriebenen Kreiselpumpe, die mit einem Laufrad 2 und einem Gehäuse 3 ausgestattet ist. Das Gehäuse 3 besitzt einen Einlauf 4 und einen Auslass 5. Der Übertragung der von dem elektrischen Antrieb 1 gelieferten Antriebskraft zum Laufrad 2 dient in diesem Ausführungsbeispiel ein Verbindungselement 6. Das Fluid tritt von links durch den Einlauf 4 in den Pumpenraum ein und wird axial dem Laufrad 2 zugeführt. Das drehende Laufrad 2 überträgt kinetische Energie auf das Fluid, welches sich im verjüngenden Druckstutzen anstaut und nach oben über den Auslass 5 den Pumpenraum verlässt. Das Verbindungselement 6 steht stellvertretend für alle technisch bekannten Verbindungsmöglichkeiten zwischen Antrieb 1 und dem Pumpengehäuse.

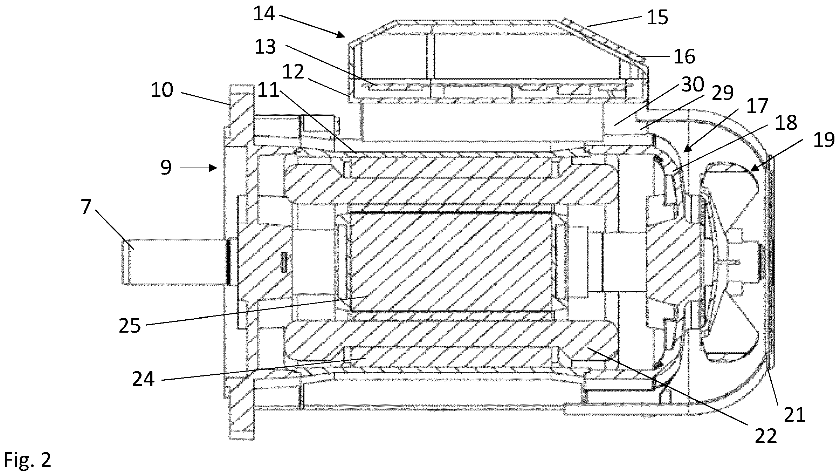

In Fig. 2 ist ein Schnitt eines elektrischen Antriebs 1 einer Kreiselpumpe dargestellt. Die Welle 7 wird von einem pumpenseitigen Lagerdeckel 9 und einem lüfterseitigen Lagerdeckel 17 gestützt und gelagert, wodurch ihr gleichzeitig eine Drehbewegung ermöglicht wird. Diese Lagerdeckel 9, 17 umfassen je einen Lagerträger 10, 18, in den je ein Wälzlager formschlüssig und/oder kraftschlüssig eingebettet ist. Gleichzeitig dienen diese Lagerdeckel 9, 17 auch als Deckel des Motorgehäuses 11 und verschließen somit den elektrischen Antrieb 1. Die Welle 7 weist einen Rotor 25 auf.

Das um laufende Magnetfeld in der Statorwicklung 22 induziert ein entgegengerichtetes Magnetfeld in den Rotor 25 und setzt ihn dadurch in Bewegung. Die Statorwicklung 22 ist durch die Statorbleche 24 fixiert.

Das Motorgehäuse 11 schließt zusammen mit dem pumpenseitigen Lagerdeckel 9 und dem lüfterseitigen Lagerdeckel 17 den elektrischen Antrieb 1 ab und fixiert gleichzeitig die Statorbleche 24. Außerhalb des Rotor-Stator-Raumes an dem lüfterseitigen Lagerdeckel 17 befindet sich das Lüfterrad 19, welches mit der Welle 7 verbunden ist. Der Lüfterdeckel 21 umschließt den Raum des Lüfters 19 und verhindert somit den ungeschützten Zugriff auf das möglicherweise drehende Lüfterrad. Der Lüfter 19 saugt einen Luftstrom zentral durch den perforierten Lüfterdeckel 21 an und erzeugt dabei einen ersten Luftstrom, der durch die Konstruktion des Lüfterdeckels 21 sowie des Lagerdeckels 17 begrenzt in einen rohrartigen Kanal geführt wird und das Motorgehäuse 11 zur Kühlung überströmt. Der Lüfterdeckel 21 schließt auf eine Weise an den Lagerdeckel 17 an, so dass unterhalb der Anordnung zur Wärmeableitung 12, insbesondere des Elektronikgehäusebodens, ein Kanal 29 gebildet wird, durch den der erste Luftstrom stromabwärts einen zweiten Luftstrom mitansaugt und sich mit dem ersten Luftstrom in einem größeren Mischkanal 30 vermischt. Somit wird wiederum die Kühlung des elektrischen Antriebs 1 und die Kühlung der Motorelektronik 14 über die Anordnung zur Wärmeableitung 12 mit den angeformten Kühlrippen intensiviert.

In dem Ausführungsbeispiel der Erfindung in Fig. 2 ist der lüfterseitige Lagerdeckel 17 mit der Anordnung zur Wärmeableitung 12 einstückig ausgebildet. Innerhalb der Anordnung 12 ist der Frequenzumrichter 13 angeordnet und wärmeabführend verbunden. Die Anordnung 12 ist mit einem Elektronikgehäusedeckel 16 verschlossen, auf dem eine Bedieneinheit 15 zur Bedienung der Motorelektronik 14 angeordnet ist.

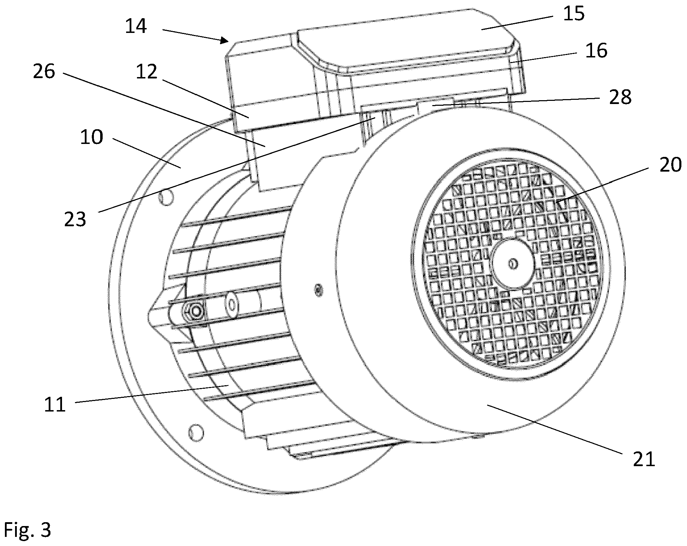

Die Fig. 3 zeigt den elektrischen Antrieb 1 in der perspektivischen Seitenansicht. Das Motorgehäuse 11 ist mit dem Lagerträger 10 verbunden. Der Lüfterdeckel 21 verfügt über Öffnungen 20 zum Ansaugen eines ersten Luftstroms und bildet den Abschluss des Motorgehäuses 11 auf der Lüfterseite. Die Anordnung zur Wärmeableitung 12 ist mit dem nicht dargestellten lüfterseitigen Lagerdeckel 17 einstückig ausgebildet und trägt die Motorelektronik 14, welche mit einem Elektronikgehäusedeckel 16 verschlossen ist, auf dem die Bedieneinheit 15 angebracht ist. Zwischen der Anordnung zur Wärmeableitung 12 und dem Lüfterdeckel 21 sind die Öffnungen 23 für die Zuströmung einer zweiten Luftströmung angeordnet. Die oberflächenvergrößernden Elemente 26, die in diesem Ausführungsbeispiel als Kühlrippen ausgeformt sind, begrenzen die Öffnungen 23 zusammen mit dem Lüfterdeckel 21 und der Anordnung zur Wärmeableitung 12 in der Art, dass sich aus den Räumen zur Zuströmung der zweiten Luftströmung Kanäle ausbilden.

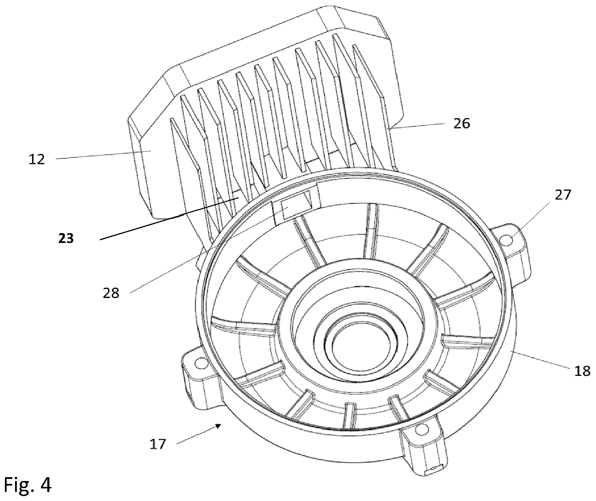

Die Fig. 4 zeigt die Anordnung zur Wärmeableitung 12, die in diesem Ausführungsbeispiel der Erfindung einstückig mit dem lüfterseitigen Lagerdeckel 17 ausgebildet ist, in der perspektivischen Innenansicht. Im Übergang der Anordnung zur Wärmeableitung 12 zum Lagerträger 18, welcher als Deckel des Motorgehäuses 11 ausgeführt ist, ist ein Führungskanal 28 integriert. Solche Kanäle 28 können wie in der Fig. 4 dargestellt rechteckig ausgeführt sein, wobei aber auch runde und/oder quadratische Kanäle denkbar sind, und in Form einer Aussparung innerhalb eines Gussteils realisiert sein. Durch einen solchen Kanal 28 wird ein oder mehrere Elemente zur Verbindung zwischen dem Frequenzumrichter 13 und der Statorwicklung 22 geführt. Die Öffnungen 23 für die zweite Luftströmung werden begrenzt durch die Anordnung zur Wärmeableitung 12, die oberflächenvergrößernden Elemente 26 und den nicht dargestellten Lüfterdeckel 21. Das in dieser Ansicht nicht dargestellte Motorgehäuse 11, welches mit dem Befestigungselement 27 fixiert werden kann, bildet die Unterseite der Begrenzungen, wodurch sich eine Vielzahl von Kanälen für die erste und zweite Luftströmung ausbilden, die sowohl die Wärme des elektrischen Antriebs 1 als auch der Motorelektronik 14 effizient abführen können.

## Patentansprüche

1. Kreiselpumpe mit einem Antrieb (1), der eine Motorelektronik (14) aufweist, die von einer Anordnung zur Wärmeableitung (12) getragen wird, mit einem Lüfter (19) zur Erzeugung einer ersten Luftströmung,
wobei
die Anordnung zur Wärmeableitung (12) mindestens eine Öffnung (23) zur Zuströmung einer zweiten Luftströmung aufweist, wobei die mindestens eine Öffnung (23) zur Zuströmung der zweiten Luftströmung jeweils als eine Fläche ausgebildet ist, die sich aus der Begrenzung der Anordnung zur Wärmeableitung (12) in Form des Elektronikgehäusebodens der Motorelektronik, aus oberflächenvergrößernden Elementen (26) in Form von Kühlrippen sowie einer Abdeckung (21) des Lüfters (19) (21) formt, wobei die Abdeckung (21) des Lüfters (19) mindestens eine Öffnung (20) zum Ansaugen des ersten Luftstroms aufweist,
**dadurch gekennzeichnet, dass**
die Abdeckung (21) des Lüfters (19) zumindest teilweise in die mindestens eine Öffnung (23) zur Zuströmung der zweiten Luftströmung hineinragt, wodurch ein Raum in Form eines Kanals (29) zur Zuströmung der ersten Luftströmung gebildet wird, der in einen zweiten Raum (30) mündet, in dem die erste Luftströmung mit der zweiten Luftströmung, welche durch die Sogwirkung der ersten Luftströmung angesaugt in diesen zweiten Raum (30) gelangt, vermischt wird, wobei eine besonders intensive Luftströmung erzeugt wird, die im weiteren Strömungsverlauf die Wärme der Motorelektronik sowie die Wärme des Elektromotors besonders effizient abführt.

2. Kreiselpumpe nach Anspruch 1, **dadurch gekennzeichnet, dass** die Anordnung zur Wärmeableitung (12) mit einem lüfterseitigen Lagerdeckel (17) unmittelbar verbunden ist.

3. Kreiselpumpe nach Anspruch 2, **dadurch gekennzeichnet, dass** die Anordnung zur Wärmeableitung (12) mit dem Lagerdeckel (17) einstückig ausgebildet ist.

4. Kreiselpumpe nach einem der Ansprüche 1 bis 3, **dadurch gekennzeichnet, dass** die oberflächenvergrößernden Elemente (26) mit der Anordnung zur Wärmeableitung (12) einstückig ausgebildet sind.

5. Kreiselpumpe nach Anspruch 2
**dadurch gekennzeichnet, dass**
der Lagerdeckel (17) mindestens einen Führungskanal (28) zur Anordnung zur Wärmeableitung (12) für Elemente aufweist, die eine Verbindung zwischen der Motorelektronik (14) und der Statorwicklung (22) herstellen.

## Claims

1. Centrifugal pump with a drive (1) which has a motor electronics unit (14) which is supported by an arrangement for discharging heat (12), having a fan (19) for generating a first air stream, wherein the arrangement for discharging heat (12) has at least one opening (23) for the inflow of a second air stream; wherein the at least one opening (23) for the inflow of the second air stream are in each case configured as an area, which areas are formed from the delimitation of the arrangement for discharging heat (12), in the form of the electronics housing base of the motor electronics unit, from surface-enlarging elements (26) in the form of cooling ribs, and a cover (21) of the fan (19), wherein the cover (21) of the fan (19) has at least one opening (20) for inducting the first air stream,
**characterized in that**
the cover (21) of the fan (19) protrudes at least partially into the at least one opening (23) for the inflow of the second air stream, as a result of which a space (29) in the form of a duct for the inflow of the first air stream is formed, which opens into a second space (30) in which the first air stream is mixed with the second air stream, the latter being inducted into this second space (30) by the suction effect of the first air steam, wherein a particularly intense air stream, which in the further course of the air steam dissipates the heat of the motor electronics unit and the heat of the electric motor in a particularly efficient manner, is generated.

2. Centrifugal pump according to Claim 1, **characterized in that** the arrangement for discharging heat (12) is connected directly to a fan-proximal bearing cover (17).

3. Centrifugal pump according to Claim 2, **characterized in that** the arrangement for discharging heat (12) is configured so as to be integral to the bearing cover (17).

4. Centrifugal pump according to one of Claims 1 to 3, **characterized in that** the surface-enlarging elements (26) are configured so as to be integral to the arrangement for discharging heat (12).

5. Centrifugal pump according to Claim 2, **characterized in that** the bearing cover (17) has at least one guide duct (28) to the arrangement for discharging heat (12) for elements, said guide duct/ducts (28) establishing a connection between the motor electronics unit (14) and the stator winding (22).

## Revendications

1. Pompe centrifuge dotée d'un système d'entraînement (1) qui présente une électronique de moteur (14) qui est portée par un agencement (12) de dissipation de chaleur, ayant un ventilateur (19) pour générer un premier flux d'air,
dans laquelle
l'agencement (12) de dissipation de chaleur présente au moins une ouverture (23) pour l'arrivée d'un deuxième flux d'air, ladite au moins une ouverture (23) pour l'arrivée du deuxième flux d'air étant réalisée sous la forme d'une surface formée à partir de la délimitation de l'agencement (12) de dissipation de chaleur, sous forme du fond du boîtier électronique de l'électronique de moteur, d'éléments (26) d'augmentation de la surface, sous forme d'ailettes de refroidissement, ainsi que d'un couvercle (21) du ventilateur (19), le couvercle (21) du ventilateur (19) présentant au moins une ouverture (20) pour l'aspiration du premier flux d'air,
**caractérisé en ce que**
le couvercle (21) du ventilateur (19) pénètre au moins partiellement dans ladite au moins une ouverture (23) pour l'arrivée du deuxième flux d'air, formant ainsi un espace sous forme d'un canal (29) pour l'arrivée du premier flux d'air, lequel débouche dans un deuxième espace (30) dans lequel le premier flux d'air est mélangé avec le deuxième flux d'air qui arrive dans ce deuxième espace (30) aspiré par l'effet d'aspiration du premier flux d'air, ce qui génère un flux d'air particulièrement intense qui, au fur et à mesure du flux, évacue de manière particulièrement efficace la chaleur de l'électronique de moteur ainsi que la chaleur du moteur électrique.

2. Pompe centrifuge selon la revendication 1, **caractérisée en ce que** l'agencement (12) de dissipation de chaleur est directement relié à un couvercle de palier (17) situé du côté du ventilateur.

3. Pompe centrifuge selon la revendication 2, **caractérisée en ce que** l'agencement (12) de dissipation de chaleur est formé d'une seule pièce avec le couvercle de palier (17).

4. Pompe centrifuge selon l'une des revendications 1 à 3, **caractérisée en ce que** :
les éléments (26) d'augmentation de la surface sont formés d'une seule pièce avec l'agencement (12) de dissipation de chaleur.

5. Pompe centrifuge selon la revendication 2, **caractérisée en ce que** le couvercle de palier (17) présente au moins un canal de guidage (28) vers l'agencement de dissipation thermique (12) pour des éléments qui établissent une connexion entre l'électronique de moteur (14) et le bobinage du stator (22) .
